# FASCICULE DE BREVET EUROPEEN

(11) **EP 2 276 911 B1**
(45) Date de publication et mention de la délivrance du brevet: **28.09.2011**
(21) Numéro de dépôt: 09731437.1
(22) Date de dépôt: 07.04.2009
(51) Int. Cl.: F01D 5/30, F04D 29/32

(54) **ROTOR DE TURBOMACHINE COMPORTANT UN BOUCHON ANTI-USURE, BOUCHON ANTI-USURE**
TURBOMASCHINENROTOR MIT EINEM VERSCHLEISSFESTEN STOPFEN UND VERSCHLEISSFESTER STOPFEN
TURBOMACHINE ROTOR COMPRISING AN ANTI-WEAR PLUG, AND ANTI-WEAR PLUG

(30) Priorité: 07.04.2008 FR 0801901
(43) Date de publication de la demande: 26.01.2011
(73) Titulaire: MERSEN France Gennevilliers S.A.S., 92231 Genevilliers (FR); Snecma, 75015 Paris (FR)
(72) Inventeur: CHRZASTEK, Thomas, F-77600 Bussy Saint Georges (FR); FORGUE, Jean-Bernard, F-89150 Montacher-villegardin (FR); GAVEAU, Dominique, F-92100 Boulogne (FR); REGHEZZA, Patrick, Jean-Louis, F-77000 Vaux Le Penil (FR); TRICONNET, Nicolas, Christian, F-33520 Bruges (FR)
(74) Mandataire: Bloch, Gérard
(86) Numéro de dépôt international: PCT/EP2009/054174
(87) Numéro de publication internationale: WO 2009/124949

(56) Documents cités:
- EP-A- 1 400 698
- EP-A- 1 873 401
- US-A- 4 483 661

## Description

La présente invention concerne le domaine des moteurs à turbine à gaz et vise en particulier un turboréacteur à soufflante avant.

Le rotor de la turbosoufflante d'un moteur équipant les avions civils comprend un disque entraîné par l'arbre basse pression. Une pluralité d'aubes s'étend radialement à la périphérie du disque, et les aubes sont retenues par leur extrémité qui en forme le pied. Selon un type de structure courant, le pied des aubes est à section en queue d'aronde et ceux-ci sont logés dans des alvéoles usinées dans la jante du disque selon une direction axiale. Immédiatement en aval du disque de soufflante et formant le même rotor se trouve le compresseur de gavage. Celui-ci est en forme de tambour et comprend plusieurs étages d'aubes. Le disque de soufflante est rendu solidaire du tambour du compresseur de gavage par boulonnage à une bride radiale de ce dernier. La bride est par ailleurs pourvue d'encoches formant un moyen de rétention axiale des aubes du disque de soufflante. Chaque pied d'aube est pourvu en aval d'une extension axiale avec deux rainures radiales et est engagé dans une encoche au niveau des rainures de manière à être bloqué contre tout déplacement axial. Un autre moyen de rétention axiale est décrit dans le brevet EP1400698 au nom de la demanderesse. Ce document contient toutes les caractéristiques du préambule de la revendication 1 et divulgue des moyens élastiques en forme de bouchon coopérant avec un flasque amont pour assurer un calage axial des aubes.

En fonctionnement normal, les efforts aérodynamiques sur les aubes de la soufflante ont une résultante axiale dirigée vers l'amont. Cependant, lorsque le moteur vient à être entraîné en autorotation, les efforts sur les aubes s'inversent. Malgré le blocage axial précité, un jeu existe et il se produit un déplacement vers l'aval. La partie de l'aube formant l'échasse, entre le pied en queue d'aronde et la plateforme, vient alors appuyer par son bord transversal aval contre la bride amont du tambour du compresseur de gavage. Une usure a été constatée sur la bride, sur sa face amont, dans les zones situées dans le prolongement des alvéoles du disque de soufflante.

Le problème associé à ce phénomène d'usure vient de la présence, dans ces zones, de perçages réalisés pour décharger les contraintes dans la bride. L'aube qui s'appuie sur la bride dans une zone avec perçage subit elle-même une érosion. L'usure de l'échasse n'est alors pas uniforme. La surface de la face aval de l'échasse ne s'use que dans la mesure où elle vient au contact de la bride ; la portion de surface qui est au droit du perçage ne s'use pas et devient proéminente à la longue. Il s'ensuit l'apparition de jeux entre les aubes et la bride qui ne sont pas souhaitables.

On résout, conformément à l'invention, ce problème avec un rotor de turbomachine comprenant un disque avec une jante et des alvéoles axiales usinées sur la jante pour le logement individuel d'aubes, un anneau étant rapporté sur une face de la jante, l'anneau étant pourvu de perçages dans le prolongement axial des alvéoles, au moins une partie desdits perçages dans le prolongement des alvéoles comprenant un bouchon, caractérisé par le fait que le bouchon est formé d'un premier demi bouchon réalisé en un premier matériau résistant à l'usure et d'un second demi bouchon en un deuxième matériau, les deux demi bouchons prenant appui l'un d'un côté de l'anneau et l'autre de l'autre côté de l'anneau et liés l'un à l'autre à travers le perçage.

Le bouchon maintient également l'étanchéité avec la cavité aval.

En disposant un bouchon en matériau résistant à l'usure du côté de l'alvéole, on crée une surface d'appui pour l'aube et l'usure est ainsi plus homogène. On résout ainsi très simplement ce problème d'usure avec une pièce dont le coût est très faible, et qui est de mise en oeuvre facile. On peut appliquer ce dispositif aussi bien sur les turbomachines neuves que sur celles déjà en cours d'utilisation.

Selon un mode de réalisation avantageux, le premier demi bouchon comprend une partie en forme de disque avec collerette et une attache, le second demi bouchon une partie en forme de disque avec collerette et une attache, les deux attaches étant de formes complémentaires pour coopérer l'une avec l'autre. Les attaches peuvent être, par exemple, à vis ou bien sous la forme d'un clip, l'attache du premier demi bouchon étant mâle et l'attache du second demi bouchon femelle.

Le bouchon est, de préférence, agencé de façon à ne pas blesser le métal constituant le tambour. En effet il s'agit lors des interventions par un technicien d'éviter la formation de tout départ de crique.

On facilite les interventions avec un disque avec collerette du premier demi bouchon comprenant un moyen d'entraînement pour enclencher l'attache. Ce moyen est formé de marquages permettant la mise en place d'un outil assurant la fixation, par exemple par vissage et dévissage du premier demi bouchon ou bien par clipsage.

On facilite encore mieux les manipulations avec un second demi bouchon comprenant un moyen empêchant sa rotation autour de l'axe de son attache. Avantageusement, le premier demi bouchon est en métal, par exemple en acier, et le second demi bouchon est en matière plastique. D'autres matériaux sont possibles. Ils peuvent être identiques ou non.

L'invention porte également sur un bouchon agencé pour former un dispositif anti usure.

L'invention porte également sur un rotor de compresseur de moteur à turbine à gaz, comprenant un disque de rotor avec une jante solidaire d'un anneau, la jante du disque présentant des alvéoles axiales pour le logement d'aubes, l'anneau recouvrant au moins partiellement le bord aval des alvéoles et comportant des perçages de décharge de contraintes dont une partie est disposée dans le prolongement axial desdits alvéoles, et comprenant un bouchon tel que décrit ci-dessus.

Plus particulièrement, le disque de rotor de turbomachine est un disque de soufflante dans un turboréacteur à soufflante avant fixé à un tambour de compresseur basse pression. L'anneau est solidaire du tambour de compresseur et le disque du rotor est fixé au tambour par boulonnage sur l'anneau. Les trous sont des trous de décharge de contraintes.

L'invention s'applique prioritairement à un turboréacteur comprenant une soufflante avant et un compresseur de gavage en aval de la soufflante dont le disque de soufflante et le tambour de compresseur forment le rotor de l'invention.

D'autres caractéristique et avantages ressortiront de la description qui suit d'un mode de réalisation en référence aux dessins annexés sur lesquels :
La figure 1 représente vu de côté un turboréacteur auquel s'applique le dispositif anti-usure de l'invention;
La figure 2 montre en perspective le détail d'un rotor de soufflante de turboréacteur du côté de la bride amont du compresseur de gavage;
La figure 3 montre le détail de la bride représentée sur la figure 2 avec un dispositif anti-usure;
La figure 4 montre en coupe axiale à travers un trou l'agencement du bouchon selon l'invention;
La figure 5 montre la tête du demi bouchon situé du côté des alvéoles;
La figure 6 montre la tête du demi bouchon situé du côté opposé à celui des alvéoles.

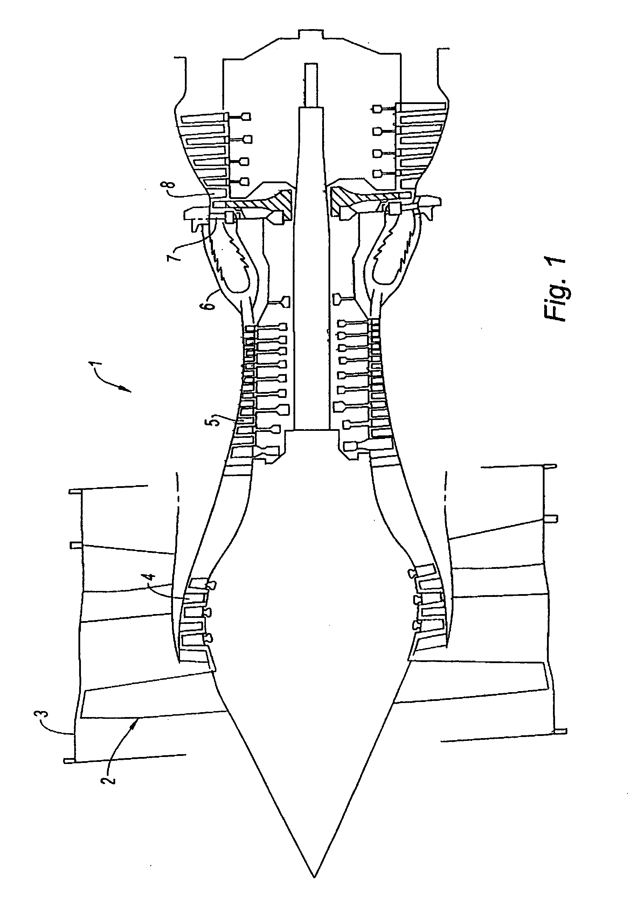

On a représenté sur la figure 1 un turboréacteur 1, en coupe axiale. Il comprend une soufflante avant 2 avec un rotor caréné dans un carter de soufflante 3 qui délimite la veine de flux secondaire. Le rotor 2 de la soufflante est solidaire d'un compresseur basse pression 4, désigné encore compresseur de gavage. L'ensemble de la soufflante 2 et du compresseur de gavage est solidaire, par l'intermédiaire d'un arbre central, d'un ensemble de turbines formant la turbine basse pression 8.

En aval du compresseur de gavage 4 l'air est encore comprimé par le compresseur à haute pression 5. Ce dernier est solidaire en rotation de l'étage de turbine à haute pression 7 par lequel il est entraîné. L'air comprimé entre dans la chambre de combustion 6 qui produit les gaz chauds pour entraîner les étages de turbine.

L'invention concerne, dans cet exemple, la partie du moteur disposée entre le rotor 2 de soufflante et le rotor 4 du compresseur à basse pression.

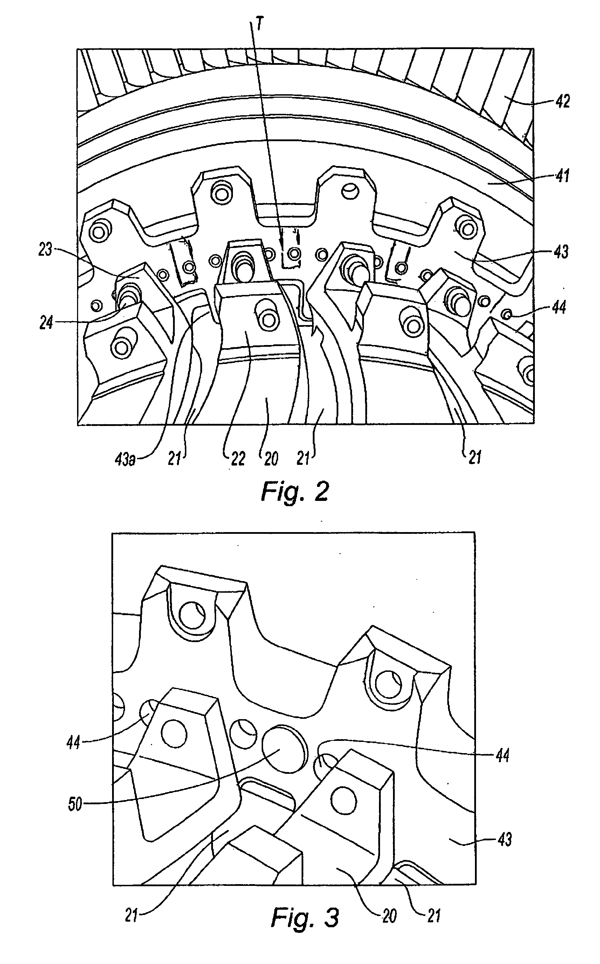

On a représenté sur la figure 2, en perspective, l'intérieur de cette zone dans laquelle on a omis les aubes de soufflante.

Le disque 20 de soufflante comprend, sur sa jante, des alvéoles 21 orientées globalement axialement avec ici une forme curviligne. Les alvéoles sont à section en queue d'aronde. La jante comprend des brides radiales 22 entre les alvéoles pour la fixation de plateformes inter aubes. Le disque 20 est solidaire du compresseur à basse pression 4 situé en aval. Le compresseur comprend un tambour 41 cylindrique sur lequel sont fixées les aubes de compresseur 42 que l'on voit en partie. À l'amont, le tambour est solidaire d'une bride amont radiale formant un anneau 43 sur laquelle la jante du disque 20 est boulonnée. La jante comprend des brides de fixation radiales 23 entre les alvéoles 21. Chaque bride radiale 23 est fixée par un boulon 24 à la bride amont 43 du compresseur.

La bride amont 43 présente des encoches de rétention 43a avec des bords radiaux et qui sont ouvertes vers l'axe de la machine. Ces encoches servent à retenir axialement les aubes par introduction du pied de l'aube en vis-à-vis. Ce mode de retenue des aubes est décrit dans le brevet au nom de la demanderesse EP165860. Entre les brides de fixation 23, sur un cercle de même diamètre, des perçages 44 sont pratiqués sur la bride amont 43. La fonction de ces perçages est de relaxer les contraintes auxquelles cette pièce est soumise. Des bouchons d'étanchéité évitent que l'air à l'aval, à l'intérieur du tambour 41, ne fuie vers l'amont dont la pression est inférieure. Ces bouchons d'étanchéité sont en matière synthétique et n'assurent aucune autre fonction.

En fonctionnement, le moteur peut être mis en autorotation avec inversion des efforts sur les aubes. Dans un tel cas les aubes viennent en appui contre la bride 43 par la face aval de leur échasse. La pression et les déplacements des aubes entraînent une usure à la fois de l'aube et de la bride amont. On voit sur ce rotor la trace T d'usure laissée par l'échasse de l'aube sur la bride. Cette trace est située dans le prolongement des alvéoles et chevauche un perçage 44. Il s'ensuit une usure non homogène de l'échasse avec creusement de la matière autour de la zone qui est dans l'axe du perçage.

L'invention remédie à ce problème avec la mise en place d'un bouchon anti-usure. La figure 3 montre la même zone du moteur que la figure 2, également sans les aubes. Seule une partie du disque de soufflante 20 est montrée. Elle est associée à la bride amont 43 du compresseur basse pression aval. Le perçage 44 qui est en vis-à-vis de l'alvéole 21, dans son prolongement, est fermé par un bouchon 50. Ce bouchon est agencé pour former une surface d'appui pour l'aube qui se trouve dans cette alvéole mais qui n'est pas représentée sur la figure.

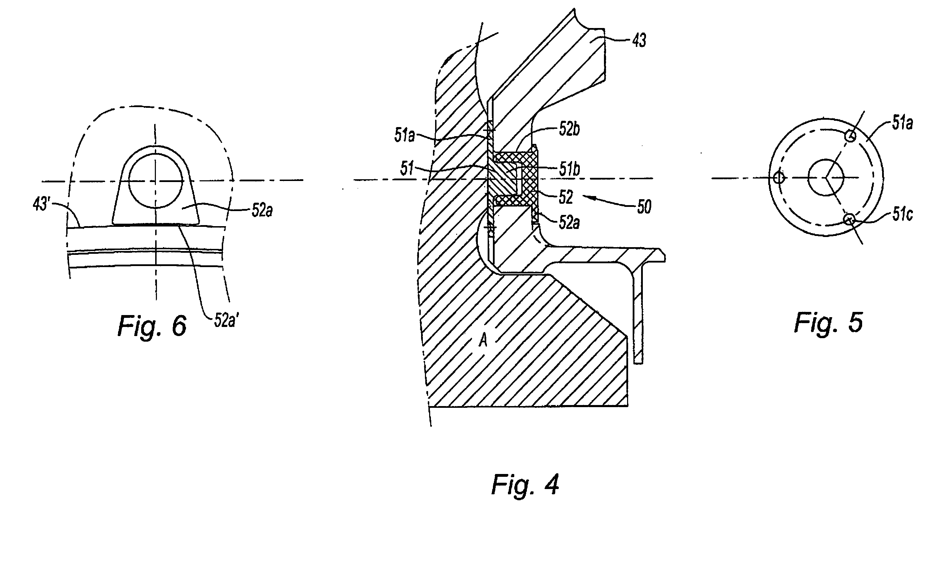

Les figures 4, 5 et 6 illustrent la solution de l'invention.

Le bouchon 50 comprend deux demi bouchons 51 et 52. Un de chaque côté du perçage 44. Le demi bouchon 51 du côté de l'aube A présente une tête 51a plus large que le diamètre du perçage. La tête 51a est en forme de disque avec collerette. Sa surface est plane de façon à constituer une large surface d'appui pour l'échasse de l'aube A. Le demi bouchon 51 comprend une attache 51b assurant la liaison avec le demi bouchon 52. Le demi bouchon 51 est en un matériau résistant à l'usure, par exemple en métal.

Comme on le voit sur la figure 5, qui est une vue de face du bouchon 50, la tête 51a comporte aussi trois marques 51c pour l'introduction d'un outil par lequel on peut attacher le demi bouchon à la tige, par exemple par vissage mais d'autres moyens sont également possibles.

Le demi bouchon 52, qui est réalisé dans une matière plastique, comprend une tête 52a en appui contre la face opposée de la bride amont 43. La tête 52a est également en forme de disque avec collerette. Le demi bouchon se prolonge dans le perçage 44 par une attache 52b qui coopère avec l'attache 51b du demi bouchon 51 pour former une liaison et maintenir les deux demi bouchons serrés l'un vers l'autre de part et d'autre de la bride amont 43. Par exemple l'attache 51b est en forme de tige filetée coopérant par vissage avec l'attache femelle 52b. Comme on le voit sur la figure 6, qui est une vue de face du demi bouchon 52, la tête 52a présente un bord 52a' formant moyen anti rotation en étant en appui contre un redan 43' usiné sur la bride amont 43.

Le montage du bouchon est le suivant.

Dans une phase initiale lors d'un montage du moteur, on place le demi bouchon 52 dans le perçage par l'intérieur du tambour. Le diamètre extérieur de l'attache femelle 52b permet un montage à force du demi bouchon 52 en introduisant l'attache femelle 52b dans le perçage 44.

On place ensuite le demi bouchon 51 de l'autre côté et on le fixe à l'aide d'un outil à trois branches dans les marques 51c de la tête 51a. En débordant du perçage la tête 51a forme une surface d'appui, suffisante pour que les efforts soient répartis. La résistance de la tête 51a est également suffisante pour que le métal ne pénètre pas dans le perçage.

Lorsqu'il est nécessaire de changer le bouchon, il suffit de démonter le demi bouchon 51 et de laisser en place l'autre demi bouchon. On résout ainsi tout problème d'accès à l'autre face de la bride amont.

Ainsi on a résolu par un moyen particulièrement simple et peu onéreux un problème d'usure qui était susceptible d'avoir des conséquences très dommageables sur la sécurité, le coût et les performances du moteur.

## Revendications

1. Rotor de turbomachine comprenant un disque (20) avec une jante et des alvéoles (21) axiales usinées sur la jante pour le logement individuel d'aubes, un anneau (43) étant rapporté sur une face de la jante, l'anneau étant pourvu de perçages (44) dans le prolongement axial des alvéoles, au moins une partie desdits perçages (44) dans le prolongement des alvéoles comprenant un bouchon (50), **caractérisé par le fait que** le bouchon est formé d'un premier demi bouchon (51) réalisé en un premier matériau métallique, résistant à l'usure, et d'un second demi bouchon (52) en un deuxième matériau, les deux demi bouchons prenant appui l'un d'un côté de l'anneau (43) et l'autre de l'autre côté de l'anneau (43) et liés l'un à l'autre à travers le perçage (44).

2. Rotor de turbomachine selon la revendication précédente dont le dit bouchon (50) forme également étanchéité.

3. Rotor de turbomachine selon la revendication 1 dont le premier demi bouchon (51) comprend une tête (51a) en forme de disque avec collerette et une attache (51b), le second demi bouchon (52) une tête en forme de disque (52a) avec collerette et une attache (52b), les deux attaches (51b, 52b) étant de formes complémentaires pour coopérer l'une avec l'autre.

4. Rotor de turbomachine selon la revendication 1 dont les attaches (51b, 52b) sont à vis ou bien par clipsage.

5. Rotor de turbomachine selon l'une des revendications 3 et 4 dont l'attache (51b) du premier demi bouchon (51) est mâle et l'attache (52b) du second demi bouchon (52) est femelle.

6. Rotor de turbomachine selon l'une des revendications 3 et 4 dont la tête (51a) du premier demi bouchon (51) est pourvue de marquages (51c) extérieurs pour permettre l'introduction d'un outil pour la fixation du premier demi bouchon (51) par l'axe du trou.

7. Rotor de turbomachine selon l'une des revendications 2 à 6 dont le second demi bouchon (52) comprend un moyen empêchant sa rotation autour de l'axe de son attache.

8. Rotor de turbomachine selon l'une des revendications 2 à 7 dont le premier demi bouchon (51) est en métal et/ou le second demi bouchon (52) est en matière plastique.

9. Turboréacteur comprenant une soufflante avant et un tambour de compresseur de gavage en aval de la soufflante dont le disque de soufflante (20) et le tambour de compresseur de gavage forment un rotor selon l'une des revendications 1 à 8, une bride amont radiale formant l'anneau (43) étant solidaire du tambour de compresseur et le disque de soufflante (20) étant fixé au tambour par boulonnage sur l'anneau.

10. Bouchon formant un moyen anti-usure pour un rotor de turbomachine selon la revendication 1 **caractérisé par le fait qu'**il comprend un premier demi - bouchon (51) réalisé en un premier matériau résistant à l'usure et d'un second demi bouchon (52) en un deuxième matériau identique ou différent du premier, les deux demi bouchons étant agencés pour venir prendre appui l'un d'un côté de l'anneau (43) et l'autre de l'autre côté de l'anneau et être liés l'un à l'autre par le trou.

11. Bouchon selon la revendication précédente dont le premier demi bouchon (51) comprend une tête (51 a) en forme de disque avec collerette et une attache (51b), le second demi bouchon (52) une tête (52a) en forme de disque avec collerette et une attache (52b), les deux attaches étant de formes complémentaires.

12. Bouchon selon la revendication 10 ou 11 dont les attaches (51b, 52b) sont à vis ou par clipsage.

13. Bouchon selon l'une des revendications 10 à 12 dont l'attache du premier demi bouchon (51) est mâle et l'attache du second demi bouchon (52) est femelle.

14. Bouchon selon l'une des revendications 10 à 13 dont la tête du premier demi bouchon (51) est pourvue de marquages extérieurs pour permettre l'introduction d'un outil pour la fixation du premier demi bouchon (51) telle qu'avec rotation autour de l'axe du trou.

15. Bouchon selon l'une des revendications 10 à 14 dont le premier demi bouchon (51) est en métal et/ou le second demi bouchon (52) est en matière plastique.

## Claims

1. A turbomachine rotor comprising a disk (20) having a rim and axial recesses (21) machined on the rim for the individual housing of blades, a ring (43) being attached to one face of the rim, the ring being provided with holes (44) axially aligned with the recesses, at least some of said holes (44) aligned with the recesses comprising a plug (50), **characterized in that** the plug is formed by a first half plug (51) made of a first wear-resistant metallic material and by a second half plug (52) made of a second material, one of the two half plugs pressing against one side of the ring (43) and the other against the other side of the ring (43) and one being linked to the other through said hole (44).

2. The turbomachine rotor as claimed in the preceding claim, wherein said plug (50) also forms a seal.

3. The turbomachine rotor as claimed in claim 1, wherein the first half plug (51) comprises a head (51a) in the form of a disk with a collar and a fastener (51b) and the second half plug (52) comprises a head in the form of a disk (52a) with a collar and a fastener (52b), the two fasteners (51b, 52b) having complementary forms in order to engage with one another.

4. The turbomachine rotor as claimed in claim 1, wherein the fasteners (51b, 52b) are screw fasteners or else snap fasteners.

5. The turbomachine rotor as claimed in either of claims 3 and 4, wherein the fastener (51b) of the first half plug (51) is male and the fastener (52b) of the second half plug (52) is female.

6. The turbomachine rotor as claimed in either of claims 3 and 4, wherein the head (51a) of the first half plug (51) is provided with external markings (51c) so as to enable the introduction of a tool for fixing the first half plug (51) along the axis of the hole.

7. The turbomachine rotor as claimed in one of claims 2 to 6, wherein the second half plug (52) comprises a means preventing it from rotating about the axis of its fastener.

8. The turbomachine rotor as claimed in one of claims 2 to 7, wherein the first half plug (51) is made of metal and/or the second half plug (52) is made of plastic.

9. A turbojet engine comprising a front fan and a low-pressure compressor drum downstream of the fan, wherein the fan disk (20) and the low-pressure compressor drum form a rotor as claimed in one of claims 1 to 8, an upstream radial flange forming the ring (43) being secured to the compressor drum and the fan disk (20) being fixed to the drum by being bolted to the ring.

10. A plug forming an anti-wear means for a turbomachine rotor as claimed in claim 1, **characterized in that** it comprises a first half plug (51) made of a first wear-resistant material and a second half plug (52) made of a second material identical to or different than the first, the two half plugs being arranged such that one presses against one side of the ring (43) and the other against the other side of the ring and such that one is linked to the other through the hole.

11. The plug as claimed in the preceding claim, wherein the first half plug (51) comprises a head (51a) in the form of a disk with a collar and a fastener (51b) and the second half plug (52) comprises a head (52a) in the form of a disk with a collar and a fastener (52b), the two fasteners having complementary forms.

12. The plug as claimed in claim 10 or 11, wherein the fasteners (51b, 52b) are screw fasteners or snap fasteners.

13. The plug as claimed in one of claims 10 to 12, wherein the fastener of the first half plug (51) is male and the fastener of the second half plug (52) is female.

14. The plug as claimed in one of claims 10 to 13, wherein the head of the first half plug (51) is provided with external markings so as to enable the introduction of a tool for fixing the first half plug (51) such as rotationally about the axis of the hole.

15. The plug as claimed in one of claims 10 to 14, wherein the first half plug (51) is made of metal and/or the second half plug (52) is made of plastic.

## Patentansprüche

1. Turbomaschinenrotor, der eine Scheibe (20) mit einem Felgenkranz und axialen Zellen (21) umfasst, die auf dem Felgenkranz für die individuelle Aufnahme von Schaufeln eingearbeitet sind, wobei auf einer Seite des Felgenkranzes ein Ring (43) angebracht ist, wobei der Ring in der axialen Verlängerung der Zellen mit Bohrungen (44) versehen ist, wobei mindestens ein Teil der Bohrungen (44) in der Verlängerung der Zellen einen Verschluss (50) umfasst, **dadurch gekennzeichnet, dass** der Verschluss von einem ersten Halbverschluss (51) aus einem ersten verschleißfesten metallischen Werkstoff und einem zweiten Halbverschluss (52) aus einem zweiten Werkstoff hergestellt ist, wobei sich von den zwei Hatbverschlüssen einer auf einer Seite des Rings (43) und der andere auf der anderen Seite des Rings (43) abstützt und sie durch die Bohrung (44) miteinander verbunden sind.

2. Turbomaschinenrotor nach vorangehendem Anspruch, wobei der Verschluss (50) auch abdichtet.

3. Turbomaschinenrotor nach Anspruch 1, wobei der erste Halbverschluss (51) einen scheibenförmigen Kopf (51a) mit Rand und eine Befestigung (51b) umfasst, der zweite Halbverschluss (52) einen scheibenförmigen Kopf (52a) mit Rand und eine Befestigung (52b), wobei die zwei Befestigungen (51 b, 52b) komplementär geformt sind, um miteinander zusammenzuarbeiten.

4. Turbomaschinenrotor nach Anspruch 1, wobei die Befestigungen (51 b, 52b) zum Schrauben oder Einrasten sind.

5. Turbomaschinenrotor nach einem der Ansprüche 3 und 4, wobei die Befestigung (51b) des ersten Halbverschlusses (51) männlich ist und die Befestigung (52b) des zweiten Halbverschlusses (52) weiblich ist.

6. Turbomaschinenrotor nach einem der Ansprüche 3 und 4, wobei der Kopf (51a) des ersten Halbverschlusses (51) mit Außenmarkierungen (51c) versehen ist, um das Einführen eines Werkzeugs zur Fixierung des ersten Halbverschlusses (51) durch die Achse des Lochs zu erlauben.

7. Turbomaschinenrotor nach einem der Ansprüche 2 bis 6, wobei der zweite Halbverschlusses (52) ein Mittel umfasst, das seine Drehung um die Achse seiner Befestigung verhindert.

8. Turbomaschinenrotor nach einem der Ansprüche 2 bis 7, wobei der erste Halbverschlusses (51) aus Metall ist und/oder der zweite Halbverschlusses (52) aus Kunststoff ist.

9. Turboluftstrahltriebwerk, das ein Gebläse vorn und nach dem Gebläse eine Druckkompressortrommel umfasst, wobei die Gebläsescheibe (20) und die Druckkompressortrommel einen Rotor nach einem der Ansprühe 1 bis 8 bilden, wobei ein radialer Flansch vorn, der den Ring (43) bildet, mit der Kompressortrommel verbunden ist und die Gebläsescheibe (20) auf der Trommel über dem Ring angeschraubt ist.

10. Verschluss, der ein Anti-Verschleißmittel für einen Turbomaschinenrotor nach Anspruch 1 bildet, **dadurch gekennzeichnet, dass** er einen ersten Halbverschluss (51) aus einem ersten verschleißfesten Werkstoff und einem zweiten Halbverschluss (52) aus einem zweiten Werkstoff umfasst, der mit dem ersten identisch oder von diesem unterschiedlich ist, wobei die zwei Halbverschlüsse ausgebildet sind, um sich einer auf der einen Seite des Rings (43) und der andere auf der anderen Seite des Rings abzustützen und miteinander durch das Loch verbunden zu sein.

11. Verschluss nach vorangehendem Anspruch, wobei der erste Halbverschluss (51) einen scheibenförmigen Kopf (51a) mit Rand und eine Befestigung (51b) umfasst, der zweite Halbverschluss (52) einen scheibenförmigen Kopf (52a) mit Rand und eine Befestigung (52b), wobei die zwei Befestigungen komplementär geformt sind.

12. Verschluss nach Anspruch 10 oder 11, wobei die Befestigungen (51 b, 52b) zum Schrauben oder Einrasten sind.

13. Verschluss nach einem der Ansprüche 10 bis 12, wobei die Befestigung des ersten Halbverschlusses (51) männlich ist und die Befestigung des zweiten Halbverschlusses (52) weiblich ist.

14. Verschluss nach einem der Ansprüche 10 bis 13, wobei der Kopf des ersten Halbverschlusses (51) mit Außenmarkierungen versehen ist, um das Einführen eines Werkzeugs zur Fixierung des ersten Halbverschlusses (51) zum Beispiel durch Drehen um die Achse des Lochs zu erlauben.

15. Verschluss nach einem der Ansprüche 10 bis 14, wobei der erste Halbverschluss (51) aus Metall ist und/oder der zweite Halbverschluss (52) aus Kunststoff ist.
